# EUROPEAN PATENT SPECIFICATION

(11) **EP 2 215 326 B1**
(45) Date of publication and mention of the grant of the patent: **02.08.2017**
(21) Application number: 08851761.0
(22) Date of filing: 19.11.2008
(51) Int. Cl.: E21B 33/12, F16J 15/08

(54) **IMPROVED SEAL ELEMENT**
VERBESSERTES DICHTUNGSELEMENT
ÉLÉMENT D'ÉTANCHÉITÉ PERFECTIONNÉ

(30) Priority: 19.11.2007 WO PCT/GB2007/004372
(43) Date of publication of application: 11.08.2010
(73) Proprietor: Petrowell Ltd, Dyce, Aberdeen (GB)
(72) Inventor: MERCER, Lee, Dyce, Aberdeen AB21 0BF (GB); CHRISTIE, Stewart, Dyce, Aberdeen AB21 0BF (GB)
(74) Representative: Moreland, David
(86) International application number: PCT/GB2008/003883
(87) International publication number: WO 2009/066068

(56) References cited:
- GB-A- 569 803
- US-A- 4 127 168
- US-A- 4 346 919

## Description

### Field of the Invention

The present invention relates to seal elements, particularly to seal elements used in the oil and gas industry.

### Background to the Invention

Conventionally well bores and apparatus associated with wellbores have been sealed with plugs and packers and the like. Plugs, for example, have three basic parts: an anchoring system, a seal element and a setting system.

The first stage in setting a conventional plug is anchoring the plug in the wellbore. Anchoring systems for conventional wellhead plugs use a set of locking dogs, which engage a recessed profile in the wellbore or tree, or use a set of slips which "bite" the casing to hold the plug in place.

The seal element is then set using a linear action setting mechanism to create a linear displacement to deform the seal element. The force required to create the seal is then locked in using a linear locking mechanism. In safety critical wellbore applications, for example sub sea trees, the seal is generally a metal-to-metal seal formed by swaging a metal ring element into the bore or onto a no-go shoulder.

To provide a seal capable of withstanding well pressures, the required setting force needs to be as high as the maximum force generated by the well pressure.

In recent years a number of high pressure, high temperature, high flow rate wells have been completed which have highlighted shortcomings in conventional designs of seal elements. For example, swaged seal elements can dislodge when exposed to the high pressure, temperature and vibration cycles of these wells, and the jarring action used to set the seal element can damage the seal element or the conduit or apparatus to be sealed.

A further disadvantage of conventional seal elements is that the expansion achievable from, for example, a metal seal element may not be sufficient to permit the apparatus incorporating the seal element to be run-into the wellbore with adequate clearance between the apparatus and the wellbore to prevent a build-up of pressure in front of the apparatus, resisting the placement of the apparatus. This can be a particular problem when a number of, for example, packers are to be located in series in a conduit, as a hydraulic lock can be formed between adjacent packers.

Furthermore, in cases where there is inadequate clearance, the metal seal element may engage the wellbore as the apparatus is run-in causing damage to the wellbore or to the seal element. If the seal element is damaged, this can result in an imperfect seal being formed by the seal element when the seal is set in its desired location.

In some instances, there is no clearance between the seal element and the conduit to be sealed and the seal element requires to be stabbed in which complicates runnig procedures and positional control.

US 4,346,919 describes a stab-in sealing system for providing metal-to-metl seals between a projecting structure and a surrounding bore. The sealing system includes a seal assembly including a frusto-conical shaped metal gasket, a split ring and an actuator ring.

GB 569803 describes a gland sealing ring for use in gland packings around reciprocatory or rotary members such as piston rods or valve stems.

### Summary of the Invention

According to a first aspect of the present invention there is provided an apparatus for sealing a conduit, the apparatus comprising: a body; a setting device; and a seal element disposed on the body, the seal element comprising: a frusto conical portion disposed around the outside of the body; and a first, external, lip extending from an external edge of the frusto-conical portion of the seal element, wherein in a run-in configuration of the apparatus, the first, external, lip of the seal element is displaced from the conduit and wherein in a set configuration of the apparatus, the first, external, lip of the seal element engages the conduit, the frusto-conical portion and the first, external, lip of the seal element being pivotable from the run-in configuration to the set configuration in response to a setting force applied to the frusto-conical portion by the setting device. Preferably, in use in the set configuration, the frusto-conical portion is biased towards the run-in configuration.

Preferably, in use in the set configuration, the first lip is biased towards a conduit wall.

Preferably, the frusto conical portion is arranged, in use, to be biased against the direction of the setting force.

Preferably, in use, the first lip is biased against a resistance applied by engagement with the conduit wall.

Preferably, in use, the setting force bends at least a portion of the seal element from the run-in configuration to the set configuration.

Preferably, in moving from the run-in configuration to the set configuration, an outer edge of the frusto conical portion is displaced radially outwards. By this it is meant the movement of the outer edge includes a radial component which is outwards.

Preferably, upon removal of the setting force, the outer edge of the frusto conical portion moves radially inwardly. By this it is meant the movement of the outer edge includes a radial component which is inwards.

Preferably, for at least part of the radially inward movement of the outer edge of the frusto conical portion the first lip is adapted to remain in contact with a conduit surface.

In one embodiment, upon removal of the setting force, the first lip moves radially outwardly.

Preferably, upon removal of the setting force, in moving from the set configuration to the run-in configuration, the angle between the frusto conical portion and the first lip increases.

Preferably, the setting force is applied to the frusto conical portion.

Most preferably, there is no setting force applied to the first lip. Applying the setting force to the frusto conical portion ensures that the seal formed between the first lip and the conduit surface is a contact seal and, as such, minimal contact stress is caused to the conduit surface by engagement between the sealing surface of the lip and conduit itself. In one embodiment, the contact stress is controlled via the living hinge between the first lip and the frusto conical portion. The hinge provides the sealing energy. In this embodiment, the sealing contact is created in situ, providing seal performance and protection for the sealing surfaces

Preferably, in use, the first lip is energised into engagement with the conduit wall by an applied pressure, such as a downhole or well pressure.

Preferably, the first lip comprises a ridge for engaging a conduit wall. Preferably, the seal element may be a polymeric material. The seal elements may be formed by pressing. Alternatively, they may be spun or machined or manufactured by any suitable method.

Preferably, the seal element comprises a second lip extending from an internal edge of the frusto conical portion.

Preferably, the second lip extends in the same direction as the first lip.

Preferably, in use in the set configuration, the second lip is biased towards the apparatus surface.

Preferably, in use, the second lip is biased against a resistance applied by engagement with the apparatus surface.

Preferably, the second lip comprises a ridge for engaging the apparatus surface.

In one embodiment the seal element is adapted to pivot about the second lip ridge.

The second lip ridge may slide with respect to the apparatus surface.

In one embodiment the apparatus comprises a plurality of seal elements.

In this embodiment the seal elements may be arranged in a stack.

Alternatively or additionally, some of the seal elements may be facing the opposite direction to some other seal elements. Having the seal elements facing in the opposite directions can, in use, seal a conduit from pressure from above or below the apparatus. According to a second aspect of the present invention there is provided a method of setting an apparatus in a conduit, the method comprising the steps of: providing an apparatus comprising: a body; a setting device; and a seal element disposed on the body, the seal element comprising: a frusto-conical portion disposed around the outside of the body; and a first, external, lip extending from an external edge of the frusto-conical portion of the seal element; applying a setting force to the frusto-conical portion of the seal element of the apparatus using the setting device to pivot the frusto-conical portion and the first, external, lip of the seal element from a run-in configuration in which the seal element is displaced from the conduit to a set configuration in which the first, external, lip engages the conduit.

According to a third aspect of the present invention there is provided a seal element for sealing a conduit, the seal element comprising:
a frusto conical portion; and
a first, external, lip extending from an external edge of the frusto conical portion; wherein the first, external, lip is adapted to be rotated into engagement with a conduit surface in response to a setting force applied to the frusto-conical portion.

It will be understood that features listed as being non-essential with respect to one aspect may be equally applicable to another aspect and have not been re-stated for brevity.

### Brief Description of the Drawings

An embodiment of the present invention will now be described with reference to the accompanying drawings in which
Figure 1 is a section view of a plug in a run-in configuration, the plug having opposed seal elements according to an embodiment of the present invention;
Figure 2 is a section view through the plug of Figure 1 in a set configuration;
Figure 3 is a close up of part of the plug of Figure 1 in a run-in configuration;
Figure 4 is a close up of part of the plug of Figure 1 in the set configuration;
Figure 5 is a section view through one of the seal elements of Figure 1; and
Figure 6 is a close up of detail 'A' of Figure 5.

### Detailed Description of the Drawings

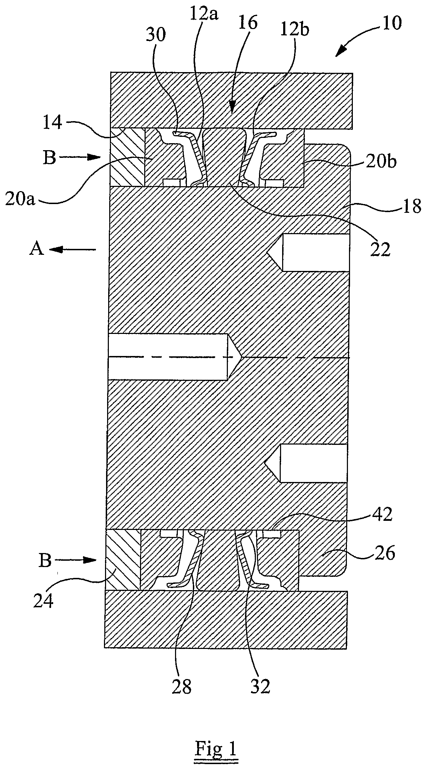

Figure 1 shows a section view of a plug, generally indicated by reference numeral 10, in a run-in configuration according to an embodiment of the present invention. The plug 10 has opposed seal elements 12a, 12b for forming a seal with the internal surface 14 of a conduit 16. In this run-in configuration, there is clearance between the seal elements 12 and the conduit surface 14 preventing damage to the conduit surface 14 and the seal elements 12 as the plug 10 is run into position.

The plug 10 further comprises a mandrel 18, a first seal setting ring 20a, a second seal setting ring 20b, a seal support ring 22 and a housing 24.

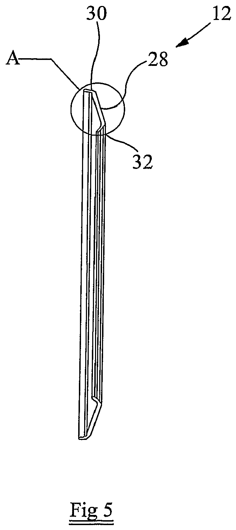

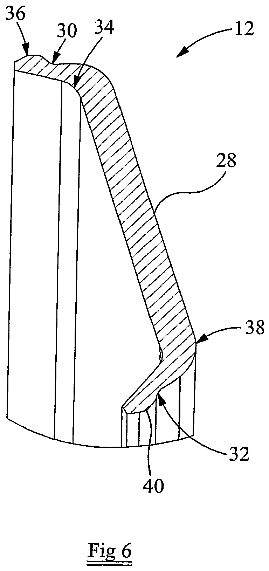

Referring to Figure 1, Figure 5, and particularly to Figure 6, the seal elements 12 comprise a frusto conical portion 28, a first lip 30 and a second lip 32. The seal elements 12 are made from pressed steel. The first lip 30 extends from an external edge 34 of the frusto conical portion 28. The first lip 30 also includes a constant radius ridge 36 for forming a contact seal with the conduit internal surface 14. The second lip 32 extends in approximately the same axial direction as the first lip 30 from an internal edge 38 of the frusto conical portion 28. The second lip 32 also comprises a constant radius ridge 40 for forming a contact seal with a mandrel surface 42 (Figure 1).

To set the seal elements 12 and create a seal, a pull force is applied to the mandrel 18 in the direction of arrow A (Figure 1) and a push force is applied to the housing 24 in the direction of arrow B. As relative movement is permitted between the mandrel 18 and the housing 24, the housing 24 acts on the first seal setting ring 20a which also moves in the direction of arrow B towards the first seal element 12a. A mandrel flange 26 moves in the direction of arrow A and acts on the second seal setting ring 20b which in turn engages and acts on the second seal element 12b. The seal elements 12 are prevented from axial movement by engagement with the seal support ring 22. The housing 24 applies a setting force to the first seal element 12a and the mandrel 14 applies a setting force to the second seal element 12b.

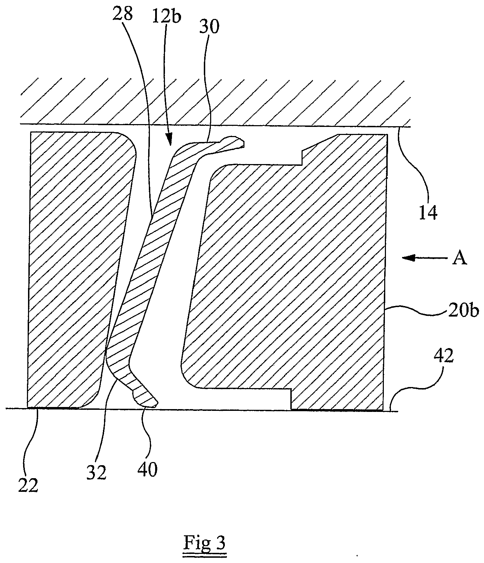

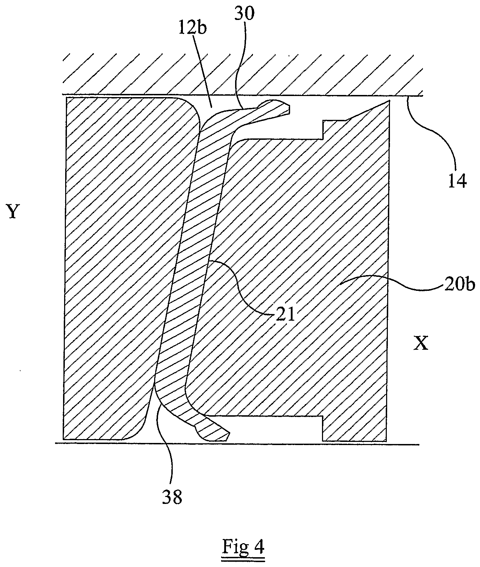

The setting procedure is shown more clearly in Figures 3 and 4. Figure 3 IS a section view of part of the plug of Figure 1 showing the second seal setting ring 20b, the seal support ring 22 and the seal element 12b. The seal element 12b is in the run-in configuration and is displaced from the conduit surface 14. The seal element inner lip 32 is in contact with the mandrel surface 42 and particularly the contact is made by the second lip ridge 40. As the second seal setting ring 20b moves in the direction of arrow A into contact with the frusto conical portion 28, the seal element 12b pivots about the second lip ridge 40 and particularly the first lip 30 pivots into engagement with the conduit surface 14.

Referring now to Figure 4, a section view of part of the plug of Figure 1 showing the seal element 12b in the set configuration. The seal element 12b has pivoted about the second lip ridge 40 and has bent at the internal edge 38 of the frusto conical portion 28; the interface between the frusto conical portion 28 and the second lip 38, such that a contact seal is formed between the first lip 30 and the conduit surface 14. Once the lip 30 has engaged the conduit surface 14, continued application of the setting force to the seal element 12b by the seal setting ring 20b results in the seal element 12b bending about the interface between the frusto conical portion 28 and the lip 30 at the frusto conical portion external edge 34. The deformation of the seal element 12 by the setting force is elastic deformation so that the seal element 12 can recover to the run-in configuration upon removal of the setting force.

The contact seal which is formed between the lip 30 and the conduit surface 14 will cause minimal damage to the conduit surface 14 because the setting force applied by the seal setting ring 20b (created by the pull of the mandrel 18 in the direction of arrow A and the push applied to the housing 24 in the direction of arrow B in Figure 1) acts primarily on the frusto conical portion 28 and does not act on the first lip 30.

The seal element 12b is arranged so that if the pressure downhole (indicated by "X" on Figure 4) is greater than the uphole pressure (indicated by "Y") then the seal will be forced into a tighter engagement with conduit surface 14.

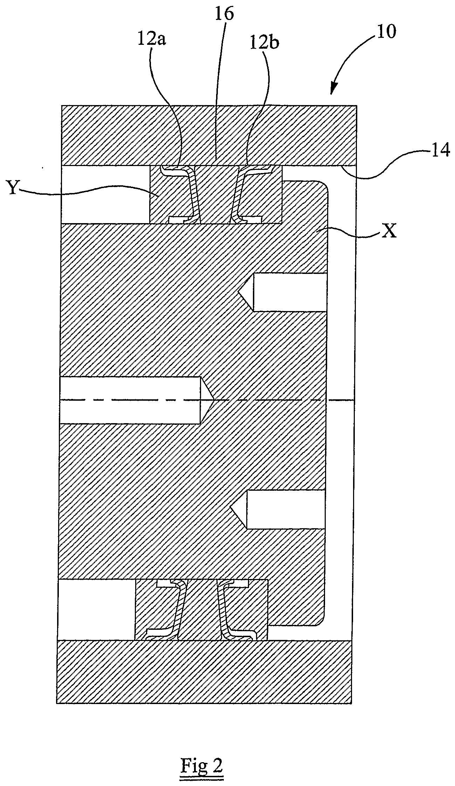

Reference is now made to Figure 2 which shows the plug 10 in the set configuration with the sea) elements 12 fully engaged with the conduit surface 14. Two seal elements 12a, 12b are provided to create a seal in both directions. As was discussed with reference to Figure 4 in the previous paragraph, the second seal element 12b will be forced into tighter engagement if the pressure downhole "X" is greater than the pressure uphole "Y" and similarly the first seal element 12a will be forced into tighter engagement if the pressure uphole "Y" is greater than the pressure downhole "X".

When the setting force is removed by moving the mandrel 18 in the direction of arrow B and the housing 24 in the direction of arrow A, the seal elements 12 can recover to the run-in configuration, permitting the plug to be recovered without damaging the conduit surface 14. It will be noted however that although the recovery of the seal elements 12 overall is away from the conduit surface 14, the recovery of the lip 30 is towards the conduit surface 14. Although only two seal elements are used in the described embodiment, and the seal elements form individual seals sealing in opposite directions, each of these individual seal elements could be replaced by a stack of seals. Furthermore although the seal elements are described in conjunction with a plug, any suitable apparatus such as a plug or gasket could incorporate the seal elements. Additionally, the angle between the lips and the frusto conical portion could be increased or decrease to accommodate differing seal glands. Similarly the lip length could vary from that shown.

## Claims

1. An apparatus (10) for sealing a conduit (16), the apparatus (10) comprising:
a body (18);
a setting device; and
a seal element (12) disposed on the body (18), the seal element (12) comprising:
a frusto conical portion (28) disposed around the outside of the body (18); and a first, external, lip (30) extending from an external edge (34) of the frusto-conical portion (28) of the seal element (12),
wherein in a run-in configuration of the apparatus (10), the first, external, lip (30) of the seal element (12) is displaced from the conduit (16) and wherein in a set configuration of the apparatus (10), the first, external, lip (30) of the seal element (12) engages the conduit (16),
the frusto-conical portion (28) and the first, external, lip (30) of the seal element (12) being pivotable from the run-in configuration to the set configuration in response to a setting force applied to the frusto-conical portion (28) by the setting device.

2. The apparatus (10) of claim 1, wherein at least one of:
the frusto-conical portion (28) of the seal element (12) is biased towards the run-in configuration when the seal element (12) defines the set configuration; and
the frusto-conical portion (28) of the seal element (12) is biased against the direction of the setting force applied to said frusto-conical portion (28).

3. The apparatus (10) of claim 1 or 2, wherein at least one of:
the first, external, lip (30) is biased towards a wall (14) of the conduit (16) when the seal element (12) defines the set configuration; and
the first, external, lip (30) is biased against a resistance applied by engagement with the conduit (16).

4. The apparatus (10) of claim 1, 2 or 3, wherein at least part of the seal element (12) comprises a bendable portion, the seal element (12) configured so that the bendable portion bends from the run-in configuration to the set configuration in response to the setting force.

5. The apparatus (10) of any preceding claim, wherein the frusto-conical portion (28) comprises a displaceable outer edge, the outer edge being displaceable radially outwards and upon removal of the setting force, an outer edge of the frusto-conical portion (28) moves radially inwardly.

6. The apparatus (10) of claim 5, wherein the seal element (12) is configured so that the annular external lip remains in contact with the conduit for at least part of the radially inward movement of the outer edge of said frusto-conical portion (28).

7. The apparatus (10) of any preceding claim, wherein the seal element (12) is configured so that the angle between the frusto-conical portion (28) and the annular external lip is greater when the seal element (12) defines the set configuration.

8. The apparatus (10) of any preceding claim, wherein the external lip comprises a ridge for engaging the conduit (16).

9. The apparatus (10) of any preceding claim, wherein the seal element (12) comprises a metal or a polymeric material.

10. The apparatus (10) of any preceding claim, wherein the seal element comprises a second, internal, lip (32) extending from an internal edge of said frusto-conical portion (28).

11. The apparatus (10) of claim 10, wherein at least one of:
the second, internal, lip (32) has a distal end extending towards a central axis of the apparatus (10); and
the second, internal, lip (32) extends in the same direction as the first, external, lip (30).

12. The apparatus (10) of claim 10 or 11, wherein the seal element (12) is configured so that the second, internal, lip (32) forms a seal with the body (18) of the apparatus (10).

13. The apparatus (10) of claim 10, 11 or 12, wherein at least one of:
the second, internal, lip (32) is biased towards the body (18) when the seal element (12) defines the set configuration; and
the second, internal, lip (32) is biased against a resistance applied by engagement with the apparatus (10).

14. The apparatus (10) of any one of claims 10 to 13, wherein the seal element (12) is configured to pivot around a contact point between the second, internal, lip (32) and the body (18) of the apparatus (10).

15. The apparatus (10) of any one of claims 10 to 14, wherein the second, internal, lip (32) comprises a ridge (40) for engaging the apparatus (10).

16. The apparatus (10) of claim 15, wherein at least one of:
the seal element (12) is configured to pivot about the ridge (40) of the second, internal, lip;
the seal element (12) is configured so that the ridge (40) of the second, internal, lip (32) slides with respect to the body (18) of the apparatus (10).

17. The apparatus (10) of any preceding claim, wherein one of:
the apparatus (10) comprises a plurality of the seal elements (12);
the apparatus (10) comprises a plurality of the seal elements (12), the seal elements (12) arranged in a stack;
the apparatus (10) comprises a plurality of the seal elements (12), some of the seal elements (12) facing the opposite direction to some other of the seal elements (12);
the apparatus (10) comprises a plurality of the seal elements (12),
wherein the seal elements (12) are arranged in a stack, and wherein some of the seal elements (12) face in the opposite direction to some other of the seasl elements (12).

18. The apparatus (10) of any preceding claim, in combination with the conduit (16).

19. A method of setting an apparatus (10) in a conduit (16), the method comprising the steps of:
providing an apparatus (10) comprising: a body (18); a setting device; and a seal element (12) disposed on the body (18), the seal element (12) comprising: a frusto-conical portion (28) disposed around the outside of the body (18); and a first, external, lip (30) extending from an external edge (34) of the frusto-conical portion (28) of the seal element (12); applying a setting force to the frusto-conical portion (28) of the seal element (12) of the apparatus (10) using the setting device to pivot the frusto-conical portion (28) and the first, external, lip (30) of the seal element (12) from a run-in configuration in which the seal element (12) is displaced from the conduit (16) to a set configuration in which the first, external, lip (30) engages the conduit (16).

20. A seal element (12) for sealing a conduit (16), the seal element comprising:
a frusto-conical portion (28); and
a first, external, lip (30) extending from an external edge (34) of the frusto-conical portion (28);
wherein the first, external, lip (30) is adapted to be rotated into engagement with the conduit surface in response to a setting force applied to the frusto-conical portion (28).

## Patentansprüche

1. Vorrichtung (10) zum Abdichten eines Kanals (16), die Vorrichtung (10) umfassend:
einen Körper (18);
eine Setzvorrichtung; und
ein Dichtungselement (12), das am Körper (18) angeordnet ist, das Dichtungselement (12) umfassend:
einen kegelstumpfförmigen Abschnitt (28), der um die Außenseite des Körpers (18) angeordnet ist; und eine erste, externe Lippe (30), die sich von einem Außenrand (34) des kegelstumpfförmigen Abschnitts (28) des Dichtungselements (12) erstreckt,
wobei die erste, externe Lippe (30) des Dichtungselements (12) in einer Einlauf-Konfiguration der Vorrichtung (10) vom Kanal (16) versetzt ist, und wobei die erste, externe Lippe (30) des Dichtungselements (12) den Kanal (16) in einer Setz-Konfiguration der Vorrichtung (10) eingreift,
wobei der kegelstumpfförmige Abschnitt (28) und die erste, externe Lippe (30) des Dichtungselements (12) als Antwort auf eine Setzkraft, die von der Setzvorrichtung auf den kegelstumpfförmigen Abschnitt (28) angewendet wird, von der Einlauf-Konfiguration zu der Setz-Konfiguration schwenkbar sind.

2. Vorrichtung (10) nach Anspruch 1, wobei mindestens eines der folgenden der Fall ist:
der kegelstumpfförmige Abschnitt (28) des Dichtungselements (12) ist in die Einlauf-Konfiguration vorgespannt, wenn das Dichtungselement (12) die Setz-Konfiguration definiert; und
der kegelstumpfförmige Abschnitt (28) des Dichtungselements (12) ist gegen die Richtung der angewendeten Setzkraft auf den kegelstumpfförmigen Abschnitt (28) vorgespannt.

3. Vorrichtung (10) nach Anspruch 1 oder 2, wobei mindestens eines der folgenden der Fall ist:
die erste, externe Lippe (30) ist zu einer Wand (14) des Kanals (16) vorgespannt, wenn das Dichtungselement (12) die Setz-Konfiguration definiert; und
die erste, externe Lippe (30) ist gegen einen Widerstand, der durch Eingriff mit dem Kanal (16) angewendet wird, vorgespannt.

4. Vorrichtung (10) nach Anspruch 1, 2 oder 3, wobei mindestens ein Teil des Dichtungselements (12) einen verbiegbaren Abschnitt umfasst, das Dichtungselement (12) so konfiguriert ist, dass der verbiegbare Abschnitt als Antwort auf die Setzkraft von der Einlauf-Konfiguration zu der Setz-Konfiguration gebogen wird.

5. Vorrichtung (10) nach einem vorherigen Anspruch, wobei der kegelstumpfförmige Abschnitt (28) einen verschiebbaren Außenrand umfasst, wobei der Außenrand radial auswärts verschiebbar ist und sich bei Aufheben der Setzkraft ein Außenrand des kegelstumpfförmigen Abschnitts (28) radial einwärts bewegt.

6. Vorrichtung (10) nach Anspruch 5, wobei das Dichtungselement (12) so konfiguriert ist, dass die ringförmige externe Lippe während mindestens eines Teils der radial einwärts Bewegung des Außenrands des kegelstumpfförmigen Abschnitts (28) in Kontakt mit dem Kanal bleibt.

7. Vorrichtung (10) nach einem vorherigen Anspruch, wobei das Dichtungselement (12) so konfiguriert ist, dass der Winkel zwischen dem kegelstumpfförmigen Abschnitt (28) und der ringförmigen externen Lippe größer ist, wenn das Dichtungselement (12) die Setz-Konfiguration definiert.

8. Vorrichtung (10) nach einem vorherigen Anspruch, wobei die externe Lippe eine Rippe zum Eingreifen des Kanals (16) umfasst.

9. Vorrichtung (10) nach einem vorherigen Anspruch, wobei das Dichtungselement (12) ein Metall- oder ein Polymermaterial umfasst.

10. Vorrichtung (10) nach einem vorherigen Anspruch, wobei das Dichtungselement eine zweite, interne Lippe (32) umfasst, die sich von einem Innenrand des kegelstumpfförmigen Abschnitts (28) erstreckt.

11. Vorrichtung (10) nach Anspruch 10, wobei mindestens eines der folgenden der Fall ist:
die zweite, interne Lippe (32) hat ein distales Ende, das sich zu einer Mittelachse der Vorrichtung (10) erstreckt; und
die zweite, interne Lippe (32) erstreckt sich in dieselbe Richtung wie die erste, externe Lippe (30).

12. Vorrichtung (10) nach Anspruch 10 oder 11, wobei das Dichtungselement (12) so konfiguriert ist, dass die zweite, interne Lippe (32) eine Dichtung mit dem Körper (18) der Vorrichtung (10) bildet.

13. Vorrichtung (10) nach Anspruch 10, 11 oder 12, wobei mindestens eines der folgenden der Fall ist:
die zweite, interne Lippe (32) ist zum Körper (18) vorgespannt, wenn das Dichtungselement (12) die Setz-Konfiguration definiert; und
die zweite, interne Lippe (32) ist gegen einen Widerstand, der durch Eingriff mit der Vorrichtung (10) angewendet wird, vorgespannt.

14. Vorrichtung (10) nach einem der Ansprüche 10 bis 13, wobei das Dichtungselement (12) konfiguriert ist, um um einen Kontaktpunkt zwischen der zweiten, internen Lippe (32) und dem Körper (18) der Vorrichtung (10) zu schwenken.

15. Vorrichtung (10) nach einem der Ansprüche 10 bis 14, wobei die zweite, interne Lippe (32) eine Rippe (40) zum Eingreifen der Vorrichtung (10) umfasst.

16. Vorrichtung (10) nach Anspruch 15, wobei mindestens eines der folgenden der Fall ist:
das Dichtungselement (12) ist konfiguriert, um um die Rippe (40) der zweiten, internen Lippe zu schwenken;
das Dichtungselement (12) ist so konfiguriert, dass die Rippe (40) der zweiten, internen Lippe (32) in Bezug auf den Körper (18) der Vorrichtung (10) gleitet.

17. Vorrichtung (10) nach einem vorherigen Anspruch, wobei eines der folgenden der Fall ist:
die Vorrichtung (10) umfasst eine Vielzahl von Dichtungselementen (12);
die Vorrichtung (10) umfasst eine Vielzahl von Dichtungselementen (12), die Dichtungselemente (12) sind in einem Stapel angeordnet;
die Vorrichtung (10) umfasst eine Vielzahl von Dichtungselementen (12), einige der Dichtungselemente (12) zeigen in die gegenüberliegende Richtung zu einigen anderen der Dichtungselemente (12);
die Vorrichtung (10) umfasst eine Vielzahl von Dichtungselementen (12), wobei die Dichtungselemente (12) in einem Stapel angeordnet sind, und wobei einige der Dichtungselemente (12) in die gegenüberliegende Richtung zu einigen anderen der Dichtungselemente (12) zeigen.

18. Vorrichtung (10) nach einem vorherigen Anspruch, in Kombination mit dem Kanal (16).

19. Verfahren zum Setzen einer Vorrichtung (10) in einen Kanal (16), das Verfahren umfassend die folgenden Schritte:
Bereitstellen einer Vorrichtung (10), umfassend: einen Körper (18); eine Setzvorrichtung; und ein Dichtungselement (12), das am Körper (18) angeordnet ist, das Dichtungselement (12) umfassend: einen kegelstumpfförmigen Abschnitt (28), der um die Außenseite des Körpers (18) angeordnet ist; und eine erste, externe Lippe (30), die sich von einem Außenrand (34) des kegelstumpfförmigen Abschnitts (28) des Dichtungselements (12) erstreckt; Anwenden einer Setzkraft auf den kegelstumpfförmigen Abschnitt (28) des Dichtungselements (12) der Vorrichtung (10) unter Verwendung der Setzvorrichtung, um den kegelstumpfförmigen Abschnitt (28) und die erste, externe Lippe (30) des Dichtungselements (12) von einer Einlauf-Konfiguration, in der das Dichtungselement (12) vom Kanal (16) versetzt ist, in eine Setz-Konfiguration zu schwenken, in der die erste, externe Lippe (30) den Kanal (16) eingreift.

20. Dichtungselement (12) zum Abdichten eines Kanals (16), das Dichtungselement umfassend:
einen kegelstumpfförmigen Abschnitt (28); und
eine erste, externe Lippe (30), die sich von einem Außenrand (34) des kegelstumpfförmigen Abschnitts (28) erstreckt;
wobei die erste, externe Lippe (30) angepasst ist, um als Antwort auf eine Setzkraft, die auf den kegelstumpfförmigen Abschnitt (28) angewendet wird, in Eingriff mit der Kanaloberfläche gedreht zu werden.

## Revendications

1. Appareil (10) permettant de fermer de manière étanche un conduit (16), l'appareil (10) comprenant :
un corps (18) ;
un dispositif d'installation ; et
un élément formant joint étanche (12) fourni sur le corps (18), l'élément formant joint étanche (12) comprenant :
une partie tronconique (28) fournie autour de l'extérieur du corps (18) ; et une première lèvre (30), externe, s'étendant à partir d'un bord externe (34) de la partie tronconique (28) de l'élément formant joint étanche (12),
dans lequel, dans une configuration de descente de l'appareil (10), la première lèvre (30), externe, de l'élément formant joint étanche (12) est déplacée par rapport au conduit (16) et dans lequel, dans une configuration installée de l'appareil (10), la première lèvre (30), externe, de l'élément formant joint étanche (12) vient en prise avec le conduit (16),
la partie tronconique (28) et la première lèvre (30), externe, de l'élément formant joint étanche (12) pouvant être pivotée de la configuration de descente vers la configuration installée en réaction à une force d'installation appliquée à la partie tronconique (28) par le dispositif d'installation.

2. Appareil (10) selon la revendication 1, dans lequel au moins une parmi :
la partie tronconique (28) de l'élément formant joint étanche (12) est sollicitée vers la configuration de descente lorsque l'élément formant joint étanche (12) adopte la configuration installée ; et
la partie tronconique (28) de l'élément formant joint étanche (12) est sollicitée à l'encontre de la direction de la force d'installation appliquée à ladite partie tronconique (28).

3. Appareil (10) selon la revendication 1 ou 2, dans lequel au moins une parmi :
la première lèvre (30), externe, est sollicitée en direction d'une paroi (14) du conduit (16) lorsque l'élément formant joint étanche (12) adopte la configuration installée ; et
la première lèvre (30), externe, est sollicitée à l'encontre d'une résistance appliquée grâce à une mise en prise avec le conduit (16).

4. Appareil (10) selon l'une quelconque des revendications 1, 2 ou 3, dans lequel au moins une partie de l'élément formant joint étanche (12) comprend une partie pouvant être courbée, l'élément formant joint étanche (12) étant configurée de sorte que la partie pouvant être courbée se courbe de la configuration de descente à la configuration installée en réaction à la force d'installation.

5. Appareil (10) selon l'une quelconque des revendications précédentes, dans lequel la partie tronconique (28) comprend un bord extérieur déplaçable, ledit bord extérieur pouvant être déplacé radialement vers l'extérieur et, lors du retrait de la force d'installation, un bord extérieur de la partie tronconique (28) se déplace radialement vers l'intérieur.

6. Appareil (10) selon la revendication 5, dans lequel l'élément formant joint étanche (12) est configuré de sorte que la lèvre externe annulaire reste en contact avec le conduit pendant au moins une partie du déplacement, dirigé radialement vers l'intérieur, du bord extérieur de ladite partie tronconique (28).

7. Appareil (10) selon l'une quelconque des revendications précédentes, dans lequel l'élément formant joint étanche (12) est configuré de sorte que l'angle entre la partie tronconique (28) et la lèvre externe annulaire est supérieur lorsque l'élément formant joint étanche (12) adopte la configuration installée.

8. Appareil (10) selon l'une quelconque des revendications précédentes, dans lequel la lèvre externe comprend une nervure permettant de venir en prise avec le conduit (16).

9. Appareil (10) selon l'une quelconque des revendications précédentes, dans lequel l'élément formant joint étanche (12) comprend un métal ou un matériau polymère.

10. Appareil (10) selon l'une quelconque des revendications précédentes, dans lequel l'élément formant joint étanche comprend une deuxième lèvre (32), interne, s'étendant à partir d'un bord interne de ladite partie tronconique (28).

11. Appareil (10) selon la revendication 10, dans lequel au moins une parmi :
la deuxième lèvre (32), interne, présente une extrémité distale s'étendant en direction d'un axe central de l'appareil (10) ; et
la deuxième lèvre (32), interne, s'étend dans la même direction que la première lèvre (30) externe.

12. Appareil (10) selon la revendication 10 ou 11, dans lequel l'élément formant joint étanche (12) est configuré de sorte que la deuxième lèvre (32), interne, forme un joint étanche avec le corps (18) de l'appareil (10).

13. Appareil (10) selon l'une quelconque des revendications 10, 11 ou 12, dans lequel au moins une parmi :
la deuxième lèvre (32), interne, est sollicitée en direction du corps (18) lorsque l'élément formant joint étanche (12) adopte la configuration installée ; et
la deuxième lèvre (32), interne, est sollicitée à l'encontre d'une résistance appliquée grâce à une mise en prise avec l'appareil (10).

14. Appareil (10) selon l'une quelconque des revendications 10 à 13, dans lequel l'élément formant joint étanche (12) est configuré pour pivoter autour d'un point de contact entre la deuxième lèvre (32), interne, et le corps (18) de l'appareil (10).

15. Appareil (10) selon l'une quelconque des revendications 10 à 14, dans lequel la deuxième lèvre (32), interne, comprend une nervure (40) permettant de venir en prise avec l'appareil (10).

16. Appareil (10) selon la revendication 15, dans lequel au moins un parmi :
l'élément formant joint étanche (12) est configuré pour pivoter autour de la nervure (40) de la deuxième lèvre, interne ;
l'élément formant joint étanche (12) est configuré de sorte que la nervure (40) de la deuxième lèvre (32), interne, coulisse par rapport au corps (18) de l'appareil (10).

17. Appareil (10) selon l'une quelconque des revendications précédentes, dans lequel :
l'appareil (10) comprend une pluralité des éléments formant joint étanche (12) ;
l'appareil (10) comprend une pluralité des éléments formant joint étanche (12), les éléments formant joint étanche (12) étant agencés en un empilement ;
l'appareil (10) comprend une pluralité des éléments formant joint étanche (12), certains éléments formant joint étanche (12) regardant dans la direction opposée par rapport à certains autres des éléments formant joint étanche (12) ;
l'appareil (10) comprend une pluralité des éléments formant joint étanche (12), dans lequel les éléments formant joint étanche (12) sont agencés en un empilement, et dans lequel certains des éléments formant joint étanche (12) regardent dans la direction opposée par rapport à certains autres des éléments formant joint étanche (12).

18. Appareil (10) selon l'une quelconque des revendications précédentes, en combinaison avec le conduit (16).

19. Procédé d'installation d'un appareil (10) dans un conduit (16), le procédé comprenant les étapes consistant à :
fournir un appareil (10) comprenant : un corps (18) ; un dispositif d'installation ; et un élément formant joint étanche (12) fourni sur le corps (18), l'élément formant joint étanche (12) comprenant : une partie tronconique (28) fournie autour de l'extérieur du corps (18) ; et une première lèvre (30), externe, s'étendant à partir d'un bord externe (34) de la partie tronconique (28) de l'élément formant joint étanche (12) ;
appliquer une force d'installation à la partie tronconique (28) de l'élément formant joint étanche (12) de l'appareil (10) en utilisant le dispositif d'installation pour faire pivoter la partie tronconique (28) et la première lèvre (30), externe, de l'élément formant joint étanche (12) à partir d'une configuration de descente dans laquelle l'élément formant joint étanche (12) est déplacé par rapport au conduit (16) vers une configuration installée dans laquelle la première lèvre (30), externe, vient en prise avec le conduit (16).

20. Élément formant joint étanche (12) permettant de fermer de manière étanche un conduit (16), l'élément formant joint étanche comprenant :
une partie tronconique (28) ; et
une première lèvre (30), externe, s'étendant à partir d'un bord externe (34) de la partie tronconique (28) ;
dans lequel la première lèvre (30), externe, est conçue pour être tournée afin de venir en prise avec la surface de conduit en réaction à une force d'installation appliquée à la partie tronconique (28).
